(19) Europäisches Patentamt
European Patent Office
Office européen des brevets

(11) **EP 1 644 158 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(51) Int Cl.:
***B23P 25/00*** *(2006.01)*  ***B23B 1/00*** *(2006.01)*
***C22C 14/00*** *(2006.01)*  ***C22F 1/18*** *(2006.01)*

(21) Anmeldenummer: **04738910.1**

(22) Anmeldetag: **09.07.2004**

(86) Internationale Anmeldenummer:
**PCT/DE2004/001496**

(87) Internationale Veröffentlichungsnummer:
**WO 2005/007338 (27.01.2005 Gazette 2005/04)**

(54) **VERFAHREN ZUM ZERSPANEN EINES WERKSTÜCKS AUS EINER TITAN-BASISLEGIERUNG**

METHOD FOR MACHINING A WORKPIECE MADE FROM A TITANIUM-BASED ALLOY

PROCEDE D'USINAGE PAR ENLEVEMENT DE COPEAUX D'UNE PIECE A BASE D'UN ALLIAGE AU TITANE

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.07.2003 DE 10332078**

(43) Veröffentlichungstag der Anmeldung:
**12.04.2006 Patentblatt 2006/15**

(73) Patentinhaber: **Technische Universität Braunschweig**
**38106 Braunschweig (DE)**

(72) Erfinder:
• **RÖSLER, Joachim**
**38116 Braunschweig (DE)**
• **BÄKER, Martin**
**38110 Braunschweig (DE)**
• **SIEMERS, Carsten**
**38104 Braunschweig (DE)**

(74) Vertreter: **Rehmann, Thorsten et al**
**Gramm, Lins & Partner GbR**
**Theodor-Heuss-Strasse 1**
**38122 Braunschweig (DE)**

(56) Entgegenhaltungen:
**EP-A- 0 479 212**  **EP-A- 1 162 282**
**US-A- 3 605 551**  **US-A- 3 963 525**
**US-A- 4 595 817**  **US-A- 4 810 465**
**US-A- 5 091 148**

• **PATENT ABSTRACTS OF JAPAN Bd. 0100, Nr. 96 (M-469), 12. April 1986 (1986-04-12) & JP 60 232801 A (SEIKO DENSHI KOGYO KK), 19. November 1985 (1985-11-19)**

**Beschreibung**

Die Erfindung betrifft ein Verfahren zum Zerspanen eines Werkstücks aus einer Titan-Basislegierung und eine TiA16V4-Legierung.

Die Druckschrift "Hydrogen in Metals and A11oy. B.A. Kolachev, Metal Science and Heat Treatment, Vol. 41, Nos. 3-4, 1999" und die Druckschrift "Effect off the structure on the cutability of Titanium alloys, Yu. B. Egorova et al. Metal Science and Heat Treatment, Vol. 45, Nos. 3-4, March 2003" beschreiben ein Verfahren zum Zerspanen von Werkstücken aus einer Titan-Basislegierung mit folgenden Schritten:

a) Befreien des Werkstücks zumindest bereichsweise von Oberflächenoxiden und/oder weiteren Deckschichten, und anschliefendes
b) Erhitzen des Werkstücks in einer wasserstoffhaltigen Atmosphäre, auf eine Glühtemperatur, wobei das Werkstück Wasserstoff aufnimmt;
c) Abkühlen des Werkstücks,
d) spanabhebende Bearbeitung des Werkstücks;
e) Erhitzen des Werkstücks in einer wasserstofffreien Atmosphäre, wobei Wasserstoff herausgelöst wird.

Die Druckschrift EP-A-0 479 212 offenbart eine TiA16V4-Legierung mit einem Anteil von 0,06-1,53 Gewichts-% Lanthan.

Titan und Titanlegierungen haben drei charakteristische Eigenschaften, die ihnen ihre technische Bedeutung geben: hohe Festigkeit bei guter Duktilität, niedriges spezifisches Gewicht und gute Korrosionsbeständigkeit gegen oxidierende Säuren. Aufgrund dieser günstigen Kombinationen von Eigenschaften werden Titanlegierungen u. a. in der Luft-und Raumfahrt, in Strahltriebwerken und Hochleistungsmotoren und im chemischen Apparatebau eingesetzt.

Eine typische Legierung ist TiA16V4 mit einer Zugfestigkeit von 900 - 1200N/mm$^2$ bei einer Bruchdehnung von etwa 10 %. In der Luft- und Raumfahrt wird dieser beliebte Titanwerkstoff für Kompressorschaufeln, Nieten, Schrauben, über Schaltzellen, über Antriebswellen, Getriebeteile, Rotorköpfe bis hin zu Treibstoffbehältern und Brennkammergehäusen eingesetzt.

Titan und seine Legierungen sind zäh und schwer zerspanbar, so dass nur Schnittgeschwindigkeiten erzielt werden können, die etwa einem 20tel der erreichbaren Schnittgeschwindigkeiten von unlegiertem Stahl entsprechen.

Um in Großdieselmotoren, wie sie beispielsweise für Schiffe oder Lokomotiven verwendet werden, einen besseren Wirkungsgrad bzw. eine höhere Leistung zu erzielen, wird die einströmende Luft durch einen Turbolader vorverdichtet. Die Turboladerverdichterräder werden dabei in der Regel aus Aluminiumlegierungen hergestellt. Soll der Wirkungsgrad der Motoren weiter verbessert werden, muss das Verdichtungsverhältnis noch weiter erhöht werden. Bedingt durch die noch stärker erwärmte komprimierte Luft bewirken hohe Verdichtungsverhältnisse dann hohe Temperaturen an den Verdichterrädern. Aluminiumlegierungen eignen sich wegen ihrer zu geringen Warmfestigkeit nicht mehr für den Einsatz in solchen Turboladern. Aus diesem Grund wird TiAl6V4 eingesetzt. Die schlechte Zerspanbarkeit stellt aber ein großes Problem dar und erhöht die Fertigungskosten drastisch, muss aber in Kauf genommen werden.

Die Verdichterräder haben einen Durchmesser von bis zu 2 m. Zur Herstellung wird aus einem Materialblock ein Rohling geschmiedet. Die Endkontur der Verdichterschaufeln wird durch spanabhebende Fertigung aus dem Rohling durch einen Fräsprozess herausgearbeitet. Die Bearbeitungszeit des Werkstücks aus der Titanlegierung ist gegenüber eines aus Aluminium etwa verzehnfacht. Auf die spanende Bearbeitung entfällt daher ein hoher Anteil der Herstellkosten.

In Folge der hohen Schnittkräfte werden außerdem die Spanwerkzeuge thermisch sehr hoch belastet und sind einem hohen Verschleiss unterworfen.

Von dieser Problemstellung ausgehend soll ein Verfahren und eine Legierung zum Zerspanen eines Werkstücks aus einer Titan-Basislegierung, insbesondere aus TiA16V4, angegeben werden, das bzw. die höhere Schnittgeschwindigkeiten gestattet.

Zur Problemlösung zeichnet sich das Verfahren durch die Schritte gemäß Anspruch 1 aus.

Durch die in das Werkstück diffundierten Wasserstoffatome wird der Werkstoff gut zerspanbar. Insbesondere bei hohen Schnittgeschwindigkeiten nimmt die Schnittkraft um über 50 % gegenüber der herkömmlichen Titanlegierung ab. Beim erneuten Erhitzen des Werkstücks im Vakuum nach der Bearbeitung diffundieren die Wasserstoffatome aus dem Werkstoff wieder heraus und es wird die ursprüngliche Duktilität wieder hergestellt.

Die Herstellkosten werden aufgrund der verminderten Bearbeitungszeit, insbesondere bei großen Bauteilen, drastisch reduziert. Auch der Werkzeugverschleiss wird reduziert. Erste Versuche haben eine Reduktion von 15% ergeben. Es hat sich insbesondere herausgestellt, dass die Abnahme der Schnittkraft bei höheren Schnittgeschwindigkeiten größer ist als bei niedrigen Schnittgeschwindigkeiten.

Zur Aufnahme des Wasserstoffs wird das Werkstück aufetwa 973 K erhitzt. Das spätere Abkühlen erfolgt im außer Betrieb genommenen Glühofen. Nach dem Abkühlen soll die Wasserstoffkonzentration im Werkstück unter 1,5 Gewichtsprozent Wasserstoff (H) in Titan (Ti) betragen.

Die wasserstoffhaltige Atmosphäre steht im Glühofen unter einem Druck von $5.10^3$ Pa. Dies entspricht einer Gleichgewichtskonzentration von etwa 0,5 Gew.-% Wasserstoff in Titan.

Die Glühzeit hängt prinzipiell von der Bauteilgeometrie ab. Sie beträgt in der wasserstoffhaltigen Atmosphäre aber mindestens 2 Stunden.

Das Werkstück bleibt auch beim Abkühlen der wasserstoffhaltigen Atmosphäre ausgesetzt.

Damit der Wasserstoff möglichst rasch aus dem Werkstück wieder herausdiffundiert, beträgt das Vakuum vorzugsweise $2.10^{-3}$ Pa. Die Glühtemperatur im Vakuum beträgt vorzugsweise wieder 973 K.

Das Aufheizen des Werkstücks erfolgt insbesondere vorzugsweise induktiv. Oberflächenoxide und/ oder weitere Deckschichten werden von dem Werkstück vor dem Erhitzen zumindest in den Bereichen entfernt, die später spanend bearbeitet werden sollen. Die Befreiung von Oberflächenoxiden oder Deckschichten erfolgt vorzugsweise mittels einer Ätzlösung, die insbesondere vorzugsweise aus einer Mischung aus $H_2O$, $HNO_3$ und HF sowie $H_2O_2$ besteht.

Der Titan-Basislegierung, insbesondere der TiAl6V4-Basislegierung, wird Lanthan beigemischt, wobei der Lanthan-Anteil 0,3 - 1,5 Atom-% beträgt.

Der Titan-Basislegierung kann auch Cer in geringen Mengen zugesetzt sein.

Überraschenderweise hat sich gezeigt, dass eine Titan-Basislegierung, der Lanthan beigemischt ist, sich durch eine erhöhte Wärmeleitfähigkeit auszeichnet, was die beim Zerspanen entstehende Reibungswärme reduziert. Bei Werkstücken aus einer Titan-Basislegierung mit Lanthan-Beimischung können folglich höhere Zerspangeschwindigkeiten realisiert werden als bei Werkstücken aus einer bisher bekannten Titan-Basislegierung. Diese höheren Schnittgeschwindigkeiten werden erreichbar, ohne dass das Werkstück vor dem Zerspanen mit Wasserstoff beladen wird.

Anhand der beigefügten Figuren soll ein Ausführungsbeispiel der Erfindung nachfolgend näher erläutert werden.

Es zeigt:

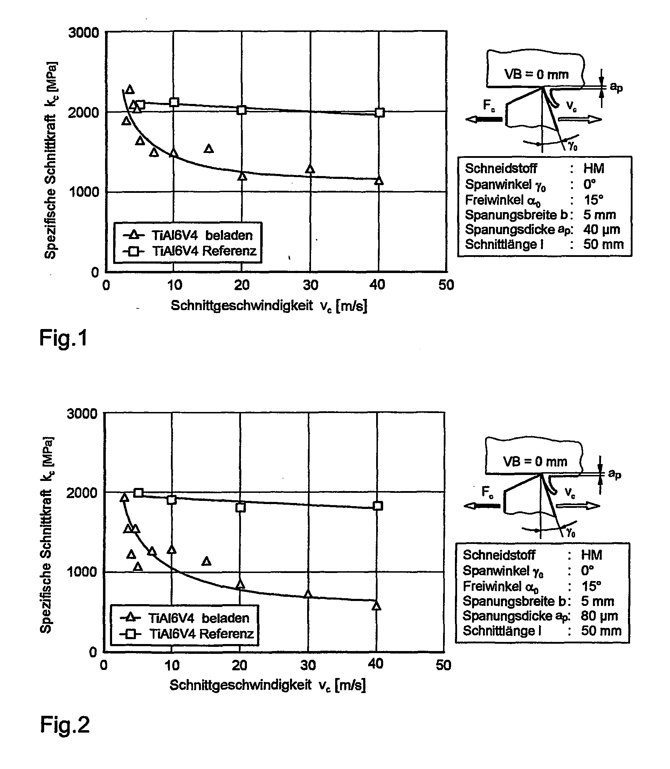

Figur 1    einen Vergleich des Schnittkraftverlaufs zwischen herkömmlichem TiAl6V4 und mit Wasserstoff beladenem TiAl6V4 mit einer Spanungsdicke von 40 $\mu$m,

Figur 2    einen Vergleich des Schnittkraftverlaufs zwischen herkömmlichem TiAl6V4 und mit Wasserstoff beladenem TiAl6V4 mit einer Spanungsdicke von 80 $\mu$m,

Figur 3a    das Zugversuchsdiagramm zwischen TiAl6V4, mit Wasserstoff beladenem TiAl6V4 und von Wasserstoff entladenem TiAl6V4 bei 293 K,

Figur 3b    das Zugversuchsdiagramm zwischen TiAl6V4, mit Wasserstoff beladenem TiAl6V4 und von Wasserstoff entladenem TiAl6V4 bei einer Temperatur 773 K,

Figur 4    das Zustandsdiagramm Titan-Wasserstoff,

Figur 5    ein Diagramm zur Spananalyse,

Figur 6a    eine Gefügeanalyse von TiAl6V4,

Figur 6b    eine Gefügeanalyse von beladenem TiAl6V4,

Figur 6c    eine Gefügeanalyse von entladenem TiAl6V4,

Figur 7a    den Verlauf der Schnittkraft und der Härte von TiAl6V4 in Abhängigkeit vom Lanthan-Anteil,

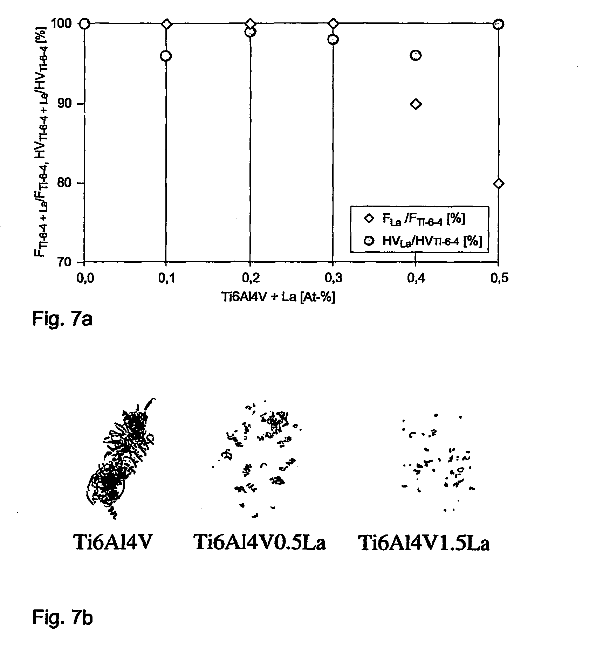

Figur 7 b    die verschiedenen Spanformen von TiAl6V4 in Abhängigkeit von dem Lanthan-Anteil.

Die Titan-Basislegierung TiAl6V4 wird herkömmlich hergestellt, d. h. Gießen, Schmieden, sowie die erforderlichen Wärmebehandlungen erfolgen nach dem Stand der Technik, so dass ein Werkstoff mit Duplexgefüge und hohen Zugfestigkeiten bei guter Duktilität entsteht und nach Herstellung des Rohlings aus der Legierung dieser auf herkömmliche Art umgeformt werden kann.

Vor dem Zerspanen des Werkstücks wird die Legierung entweder vollständig oder nur in den zu zerspanenden Bereichen mit einer Ätzlösung, die beispielsweise besteht aus 50 ml $H_2O$, 50 ml $HNO_3$, 10 ml der Lösung [12 ml HF + 70ml $H_2O_2$], 5 - 10 Minuten gereinigt, so dass Oberflächenoxide und mögliche Deckschichten an der Werkstückoberfläche entfernt werden. Anschließend wird das Werkstück in einem Induktionsofen, in dem eine wasserstoffhaltige Atmosphäre mit einem Druck von $5.10^3$ Pa herrscht, auf eine Temperatur von 973 K (700°C) gebracht und mindestens 2 Stunden geglüht, wodurch Wasserstoffatome in das Werkstück diffundieren und sich in dem Grundwerkstoff einlagern. Die Diffusionsgeschwindigkeit von Wasserstoff in Titan ist im Vergleich zu anderen Metallen hoch. Bei 973 K etwa 0,1 mm/min. Das bedeutet, dass bei einer Stunde Glühzeit eine Eindringtiefe des Wasserstoffs in das Titanwerkstück von 6 mm zu erwarten ist. Die Eindringtiefe erhöht sich mit steigender Temperatur. Da das zu zerspanende Volumen bekannt ist, kann die Beladungszeit entsprechend angepasst werden, so dass nur die zu zerspanenden Bereiche mit Wasserstoff angereichert sind. Die Glühzeit hängt prinzipiell von der Bauteilgeometrie ab. Je größer die zu zerspanenden Bereiche der Bauteile sind, um so länger muss das Werkstück geglüht werden. Die Wasserstoffkonzentration im Werkstück soll nach dem Abkühlen 0,5 Gew.-% im Titan betragen.

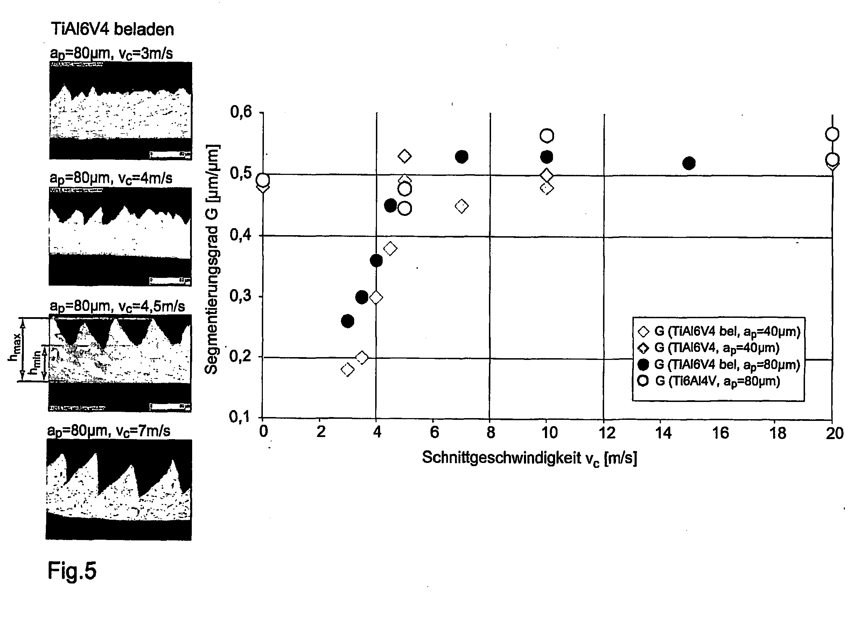

Zum Abkühlen wird der Induktionsofen ausgeschaltet und das Werkstück sich selbst überlassen. Wenn es eine Temperatur erreicht hat, die eine weitere Bearbeitung gestattet, wird das mit Wasserstoff beladene Werkstück spanabhebend bearbeitet. Figur 5 zeigt den Segmentierungsgrad G über der Schnittgeschwindigkeit $v_c$ für einen beladenen und einen unbeladenen Werkstoff bei einer Spanungsdicke $a_p$ von 40 $\mu$m und von 80 $\mu$m.

Der Segmentierungsgrad bestimmt sich nach der Formel:

$$G = \frac{h_{max} - h_{min}}{h_{max}}$$

wobei bei 0 < G < 0,3 ein Fließspan vorliegt, bei G ≈0,3 ein Übergangsspan und bei G > 0,3 ein Segmentspan vorliegt.

Dem linken Bereich der Figur 5 ist entnehmbar, dass nach der Beladung des Werkstoffs mit Wasserstoff sich bei der Zerspanung ein schnittgewindigkeitsabhängiger Übergang vom Fließ- zum Segmentspan einstellt, der beispielsweise auch bei der Zerspanung von Stählen und Aluminiumlegierungen beobachtet werden kann, nicht jedoch bei unbeladenem TiAl6V4.

Segmentspäne haben ein sägeblattartiges Aussehen, während Fließspäne Späne mit konstantem Querschnitt über der Spanlänge sind.

Nach dem Zerspanen wird das Werkstück erneut geätzt und dann geglüht. Diesmal wird ein Vakuum von 2.10⁻³ Pa angelegt. Das Werkstück wird wieder bei 773 K geglüht, damit die Wasserstoffatome aus dem Werkstück wieder herausdiffundieren können, wodurch die ursprüngliche Duktilität des Werkstücks hergestellt wird. Wenn die Duktilität des mit Wasserstoff beladenen Werkstücks im Ausnahmefall für bestimmte Einsatzzwecke ausreichend hoch ist, kann auf das erneute Glühen nach dem Zerspanen verzichtet werden.

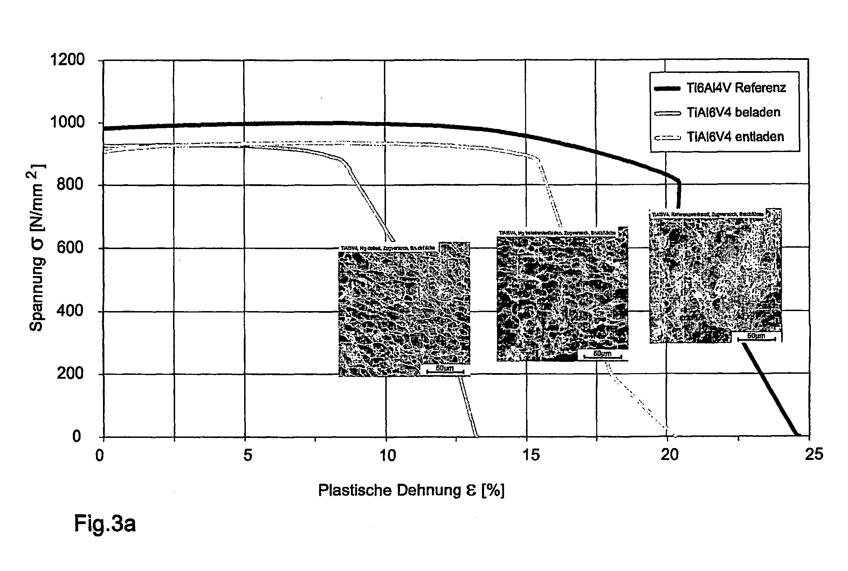

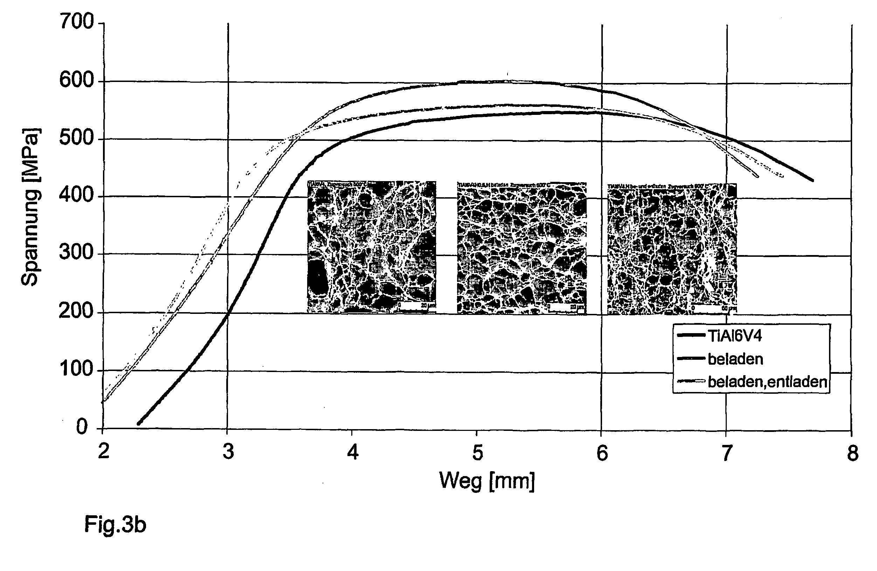

Wie Figuren 3a und 3b zeigen, sind die Anforderungen an die Festigkeit und die Duktilität des Werkstoffs bei Raumtemperatur (293 K) als auch bei 973 K durch die modifizierte Legierung gewährleistet. Die erreichte Festigkeit der wasserstoffbeladenen Proben lag innerhalb der vom $\alpha$-Phasenanteil abhängigen Schwankungsbreite verschiedener Duplexgefüge. Wie Figur 3a zeigt, führt das Beladen des Werkstoffes (Werkstück) bei einer Abnahme der Festigkeit um etwa 8 % zu einer Verminderung der Bruchdehnung, die in einer abnehmenden Bruchdehnung von 20 % auf 8 % resultiert. Durch die nachgestellte Entladungsbehandlung kann bei gleichbleibender Festigkeit die Zähigkeit wieder auf etwa 16 %, also deutlich gesteigert werden. Alle drei Werkstoffe zeigen ein duktiles Bruchverhalten mit einer wabenartigen Bruchfläche. An den Proben war eine deutliche Brucheinschnürung zu erkennen.

Figur 3b ist entnehmbar, dass die Festigkeit der beladenen Probe gegenüber der Referenzprobe bei 773 K (500 °C) geringfügig erhöht ist, was durch eine erhöhte Diffusionsgeschwindigkeit des Wasserstoffs in Titan bei dieser Temperatur zu erklären ist, so dass es zu einer Behinderung der Versetzungsbewegung kommt. Bei der Bruchdehnung lassen sich hingegen keine Unterschiede messen.

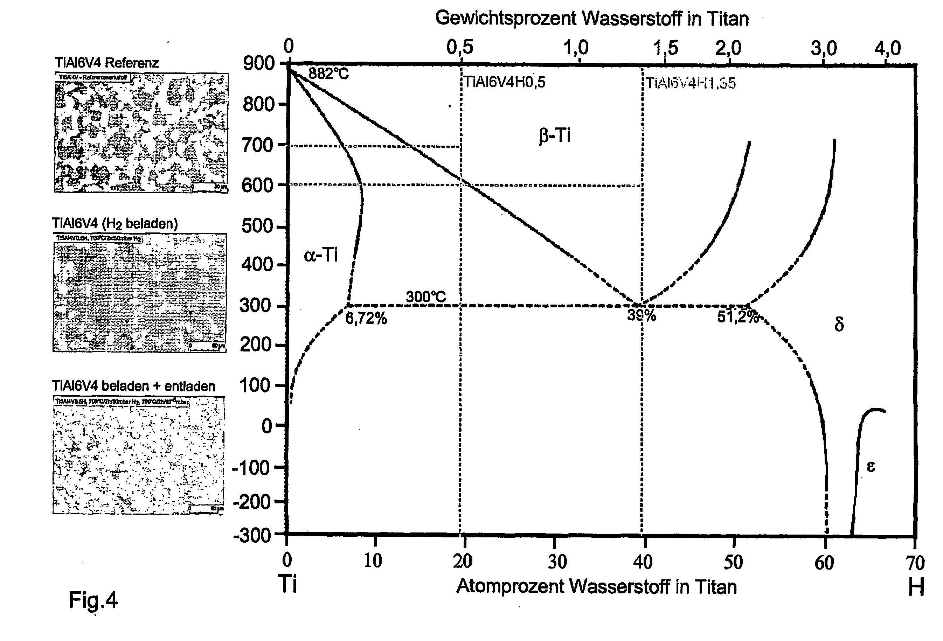

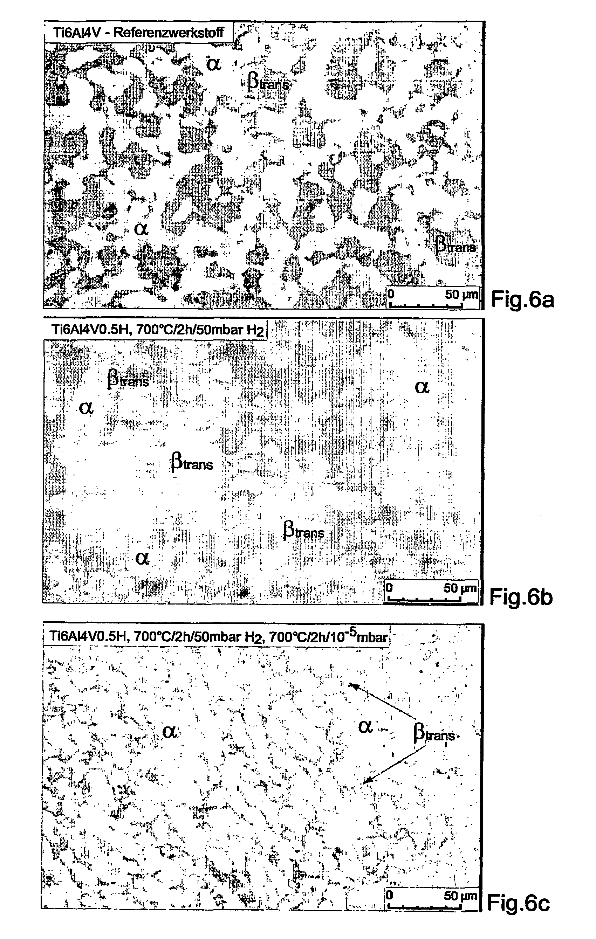

Wasserstoff stabilisiert bekanntlich die kubisch raumzentrierte $\beta$ - Phase in Titan. Entsprechend wird gemäß dem in Figur 4 dargestellten Zustandsdiagramm Ti-H die Phasenumwandlung $\alpha \rightarrow \beta$ durch Zulegieren von Wasserstoff zu tieferen Temperaturen hin verschoben, so dass bei einer Wärmebehandlung bei 700 ° C (973 K) in wasserstoffhaltiger Atmosphäre mit der Umwandlung in ein reines $\beta$-Titangefüge zu rechnen wäre. Wärmebehandlungen im Einphasengebiet führen in der Regel zu einem grobkörnigen Gefüge. An drei verschiedenen Proben wurde eine Gefügeanalyse durchgeführt. Die Figuren 6a bis 6c zeigen, dass es nicht zu einer unerwünschten Gefügeveränderung durch Kornwachstum kommt, also völlig überraschend nach der Dotierung offensichtlich kein einphasiges $\beta$ -Titan vorliegt. Wahrscheinlich ist dies auf die Wirkung des Legierungselementes Aluminium als $\alpha$ - Stabilisator zurückzuführen. Ein grobkörniges Gefüge würde die mechanischen Eigenschaften des Werkstoffs deutlich verschlechtern. Erfindungsgemäß ist aber die Stabilität des Gefüges sichergestellt.

Der Titan-Basislegierung, insbesondere der Legierung TiAl6V4, kann Lanthan in einer Menge von 0,3 bis 3 Atom-% beigemischt werden. Bis zu einem Lanthan-Gehalt von 1,5 Atom-% findet eine vollständige Ausscheidung des Lanthans im Grundgefüge statt. Die Partikel haben eine durchschnittliche Größe von 12 $\mu$m. Die Verteilung der Lanthanausscheidungen beschränkt sich auf die Korngrenzen und das Korninnere zwischen den Dendriten des Gussgefüges. Untersuchungen haben ergeben, dass die Ausscheidungen als nahezu reines Lanthan identifiziert werden. Sauerstoff oder Stickstoff sind nicht nachzuweisen. Bei Lanthangehalten ab 2 Atom-% bildet sich neben den Lanthanausscheidungen eine zweite Phase. Das Gefüge der zweiten Phase besteht aus einer Lanthanmatrix (80 % des Gefüges) mit meanderförmigen Titaneinschlüssen (etwa 20 %). Aluminium oder Vanadium lassen sich nicht nachweisen. Ein nahezu gleiches Aussehen des Gefüges ist erreichbar, wenn der Legierung anstatt Lanthan Cer beigemischt wird.

Die Legierung TiAl6V4 mit Lanthan wird in einem Vakuum-Lichtbogenofen hergestellt. Als Vorlegierung wird die herkömmliche TiAl6V4-Legierung verwendet, die mit elementarem Lanthan als Block zusammen in den Ofen verbracht wird. Vor dem Schmelzen wird zunächst ein Vakuum von beispielsweise 10⁻³ Pa erzeugt, um Sauerstoff aus der Ofenkammer zu entfernen. Der Zündvorgang des Lichtbogens erfolgt dann bei cirka 6.10⁴ Pa in der Ofenkammer. Da Titan bei Raumtemperatur nur sehr geringe Mengen von Lanthan lösen kann, entsteht bei der Herstellung der Legierung ein Gefüge aus TiAl6V4 mit diskret ausgeschiedenen Lanthan-Partikeln. Vor dem Einschmelzen muss die Oxidschicht auf dem Lanthanblock entfernt werden. Dies geschieht zum Beispiel mechanisch mit einer Feile mit anschließender Reinigung und Lagerung in Alkohol oder Azeton bis zum Verbringen des Lanthans in den Ofen. Bei Schmelzen der Legierung zeigt sich überraschenderweise, dass sich die Wärmeleitfähigkeit der lanthanhaltigen Legierung gegenüber der Standardlegierung erhöht, da die Schmelze deutlich schneller abkühlt als die Legierung ohne Lanthanzusatz. Damit die technische Anwendbarkeit der Legierung gewährleistet ist, muss die Legierung thermomechanisch behandelt werden, um ein Duplexgefüge herzustellen. Die Legierung lässt sich hierzu in einem Temperaturbereich zwischen 973 K und 1023 K beispielsweise durch Strangpressen umformen. Im stranggepressten Zustand erreicht diese Legierung eine Zugfestigkeit von etwa 1000 N/mm$^2$ und ist damit mit der Basislegierung TiAl6V4 vergleichbar.

Wie Figur 7a zeigt, vermindert sich die Schnittkraft in Abhängigkeit des Lanthangehalts. Sie setzt ab einem Lanthangehalt von 0,3 Atom-% ein und reduziert die Schnittkraft um 20 % bei einem Lanthangehalt von 0,5 Atom-%. Wie die Figur weiterhin zeigt, ändert sich die Härte des Werkstoffs durch Zulegieren von Lanthan so gut wie nicht.

Figur 7b zeigt, dass bei der Zerspanung von TiAl6V4 ohne LanthanZusatz ein Band- oder Wirrspan entsteht. Durch das Zulegieren von Lanthan ergeben sich bei der Zerspanung kurzbrechende Späne, wie sie zum Beispiel von Automatenstählen bekannt sind, jedoch nicht von TiAl6V4. Erklärbar ist dies durch die Anwesenheit der Lanthanpartikel im Gefüge. Der kurzbrechende Span hat den Vorteil, dass die Kontaktfläche und damit die Kontaktzeit zwischen Span und Schneidfläche des Werkzeugs verringert wird, wodurch sich die in der Kontaktzone entstehende Reibungswärme deutlich vermindert. Durch die erhöhte Wärmeleitfähigkeit wird die entstehende Reibungswärme zu einem wesentlich größeren Teil als bei TiAl6V4 in den Span abgeleitet, wodurch die thermische Belastung des Werkzeugs herabgesetzt wird und sich damit die Standzeit erhöht, was die Bearbeitungskosten reduziert.

## Patentansprüche

1. Verfahren zum Zerspanen eines Werkstücks aus einer Titan-Basislegierung mit folgenden Schritten:

   a) Befreien des Werkstückes zumindest bereichsweise von Oberflächenoxiden und/oder weiteren Deckschichten und auschlieβendes
   b) Erhitzen des Werkstücks in einer wasserstoffhaltigen Atmosphäre, die unter einem Druck von etwa 5.10$^3$ Pa steht, auf eine Glühtemperatur von etwa 973 K, wobei das Werkstück Wasserstoff aufnimmt;
   c) Abkühlen des Werkstücks in der wasserstoffhaltigen Atmosphäre
   d) spanabhebende Bearbeitung des Werkstücks;
   e) Erhitzen des Werkstücks in einer wasserstofffreien Atmosphäre, wobei Wasserstoff herausgelöst wird.

2. Verfahren nach Anspruch 1, **dadurch gekennzeichnet, dass** das Werkstück zum Herauslösen von Wasserstoff im Vakuum erhitzt wird.

3. Verfahren nach Anspruch 1 oder 2, **dadurch gekennzeichnet, dass** die Glühtemperatur in der wasserstofffreien Atmosphäre, insbesondere im Vakuum mindestens 773 K beträgt

4. Verfahren nach einem oder mehreren der vorstehenden Ansprüche, **dadurch gekennzeichnet, dass** die Glühzeit in der wasserstoffhaltigen Atmosphäre mindestens 2 Stunden beträgt.

5. Verfahren nach Anspruch 1, **dadurch gekennzeichnet, dass** das Vakuum mindestens 2.10$^{-3}$ Pa beträgt.

6. Verfahren nach Anspruch 1 oder 5, **dadurch gekennzeichnet, dass** die Erhitzung induktiv erfolgt.

7. Verfahren nach einem oder mehreren der vorstehenden Ansprüche, **dadurch gekennzeichnet, dass** die Wasserstoffkonzentration im Werkstück nach dem Abkühlen weniger als 1,5 Gew.-% in Titan beträgt.

8. Verfahren nach Anspruch 7, **dadurch gekennzeichnet, dass** die Wasserstoffkonzentration 0,5 Gew.-% beträgt.

9. Verfahren nach Anspruch 8, **dadurch gekennzeichnet, dass** die Oberflächenoxide und/oder weitere Deckschichten mittels einer Ätzlösung entfernt werden.

10. Verfahren nach Anspruch 9, **dadurch gekennzeichnet, dass** als Ätzlösung eine Mischung bestehend aus $H_2O$, $HNO_3$, HF und $H_2O_2$ verwendet wird.

11. Verfahren nach Anspruch 10, **dadurch gekennzeichnet, dass** als Ätzlösung ein Gemisch aus 50 ml $H_2O$, 50 ml $HNO_3$, 10 ml der Lösung [12 ml HF+70ml $H_2O_2$] verwendet wird.

12. Verfahren nach einem oder mehreren der vorstehenden Ansprüche, **dadurch gekennzeichnet, dass** das Werkstück aus TiAl6V4 mit einem Anteil von 0,3 - 1,5 Atom-% Lanthan besteht, das im Grundgefüge vollständig ausgeschieden ist und die Ausscheidungen nahezu reines Lanthan sind, die Partikel eine durchschnittliche Größe von 12 $\mu$m haben, die Verteilung der Lanthanauscheidungen auf die Korngrenzen und das Korninnere zwischen den Dendriten des Gussgefüges beschränkt sind und Sauerstoff und Stickstoff nicht nachweisbar sind.

13. TiAl6V4-Legierung mit einem Anteil von 0,3 - 1,5 Atom-% Lanthan, das im Grundgefüge vollständig ausgeschieden ist und die Ausscheidungen nahezu reines Lanthan sind, die Partikel eine durchschnittliche Größe von 12 μm haben, die Verteilung der Lanthanauscheidungen auf die Korngrenzen und das Korninnere zwischen den Dendriten des Gussgefüges beschränkt sind und Sauerstoff und Stickstoff nicht nachweisbar sind.

## Claims

1. Method for machining a workpiece made of a titanium-based alloy, comprising the following steps:

   a) freeing the workpiece, at least in regions, of surface oxides and/or further outer layers, and subsequent
   b) heating of the workpiece in a hydrogen-containing atmosphere, which is under a pressure of about $5 \cdot 10^3$ Pa, to an annealing temperature of about 973 K, wherein the workpiece takes up hydrogen;
   c) cooling the workpiece in the hydrogen-containing atmosphere
   d) metal-removing machining of the workpiece;
   e) heating the workpiece in a hydrogen-free atmosphere, hydrogen being released.

2. Method according to claim 1, **characterised in that** the workpiece is heated to release hydrogen in a vacuum.

3. Method according to claim 1 or 2, **characterised in that** the annealing temperature in the hydrogen-free atmosphere, in particular in the vacuum, is at least 773 K.

4. Method according to one or more of the preceding claims, **characterised in that** the annealing time in the hydrogen-containing atmosphere is at least 2 hours.

5. Method according to claim 1, **characterised in that** the vacuum is at least $2 \cdot 10^{-3}$ Pa.

6. Method according to claim 1 or 5, **characterised in that** the heating takes place inductively.

7. Method according to one or more of the preceding claims, **characterised in that** the hydrogen concentration in the workpiece after cooling is less than 1.5 % by weight in titanium.

8. Method according to claim 7, **characterised in that** the hydrogen concentration is 0.5 % by weight.

9. Method according to claim 8, **characterised in that** the surface oxide and/or further outer layers are removed by means of an etching solution.

10. Method according to claim 9, **characterised in that** a mixture consisting of $H_2O$, $HNO_3$, HF and $H_2O_2$ is used as the etching solution.

11. Method according to claim 10, **characterised in that** a mixture of 50 ml $H_2O$, 50 ml $HNO_3$, 10 ml of the solution [12 ml HF + 70 ml $H_2O_2$] is used as the etching solution.

12. Method according to one or more of the preceding claims, **characterised in that** the workpiece consists of TiAl6V4 with a proportion of 0.3 - 1.5 atomic % lanthanum, which is completely precipitated in the basic microstructure and the precipitates are virtually pure lanthanum, the particles have a mean size of 12 μm, the distribution of the lanthanum precipitates is limited to the grain boundaries and the grain interior between the dendrites of the cast microstructure and oxygen and nitrogen are not detectable.

13. TiAl6V4 alloy with a proportion of 0.3 - 1.5 atomic % lanthanum, which is completely precipitated in the basic microstructure and the precipitates are virtually pure lanthanum, the parties have a mean size of 12 μm, the distribution of the lanthanum precipitates is limited to the grain boundaries and the grain interior between the dendrites of the cast microstructure and oxygen and nitrogen are not detectable.

## Revendications

1. Procédé d'usinage par enlèvement de copeaux d'une pièce à base d'un alliage au titane, comprenant les étapes suivantes :

   a) débarrasser la pièce à usiner, au moins dans une zone, des oxydes de surface et/ou autres couches de recouvrement, puis;
   b) chauffer la pièce à usiner, dans une atmosphère contenant de l'hydrogène et se trouvant sous une pression d'environ $5.10^3$ Pa, jusqu'à une température d'incandescence d'environ 973 K sous laquelle la pièce à usiner absorbe de l'hydrogène ;
   c) refroidir la pièce à usiner dans l'atmosphère contenant de l'hydrogène ;
   d) usiner la pièce à usiner par enlèvement de copeaux;
   e) chauffer la pièce à usiner dans une atmosphère dénuée d'hydrogène, dans laquelle l'hydrogène est éliminé.

2. Procédé selon la revendication 1, **caractérisé en ce que** l'on chauffe la pièce à usiner dans le vide pour éliminer de l'hydrogène.

3. Procédé selon la revendication 1 ou 2, **caractérisé en ce que** la température d'incandescence dans l'atmosphère dénuée d'hydrogène, en particulier dans le vide, s'élève au moins à 773 K.

4. Procédé selon l'une ou plusieurs des revendications précédentes, **caractérisé en ce que** le temps d'incandescence dans l'atmosphère contenant de l'hydrogène s'élève au moins à 2 heures.

5. Procédé selon la revendication 1, **caractérisé en ce que** le vide atteint au moins à $2.10^{-3}$ Pa.

6. Procédé selon la revendication 1 ou 5, **caractérisé en ce que** le chauffage s'effectue par induction.

7. Procédé selon l'une ou plusieurs des revendications précédentes, **caractérisé en ce que** la concentration en hydrogène dans la pièce à usiner après ie refroidissement s'élève à moins de 1,5 % en poids dans le titane.

8. Procédé selon la revendication 7, **caractérisé en ce que** la concentration d'hydrogène s'élève à 0,5% en poids.

9. Procédé selon la revendication 8, **caractérisé en ce qu'**on enlève les oxydes de surfaces et/ou autres couches de recouvrement au moyen d'une solution décapante.

10. Procédé selon la revendication 9, **caractérisé en ce que** l'on utilise comme solution décapante un mélange composé de $H_2O$, $HNO_3$, HF et $H_2O_2$.

11. Procédé selon la revendication 10, **caractérisé en ce que** l'on utilise comme solution décapante un mélange formé de 50 ml de $H_2O$, 50 ml de $HNO_3$, 10 ml de la solution [12 ml HF + 70 ml $H_2O_2$].

12. Procédé selon l'une ou plusieurs des revendications précédentes, **caractérisé en ce que** la pièce à usiner est composée de TiAl6V4 avec une proportion de lanthane de 0,3-1,5 % en atomes, lanthane qui est entièrement séparé dans la structure primaire, **en ce que** les éléments séparés sont presque du lanthane pur, les particules ont une taille moyenne de 12 $\mu$m, la distribution des éléments séparés de lanthane est limitée aux frontières des grains et à l'intérieur des grains entre les dendrites de la structure brute, et l'oxygène et l'azote ne sont pas décelables.

13. Alliage de TiAl6V4 avec une proportion de lanthane de 0,3-1,5 % en atomes, lanthane qui est entièrement séparé dans la structure primaire, les éléments séparés étant presque du lanthane pur, les particules ayant une taille moyenne de 12 $\mu$m, la distribution des éléments séparés de lanthane se limitant aux frontières des grains et à l'intérieur des grains entre les dendrites de la structure brute, et l'oxygène et l'azote n'étant pas décelables.

**Fig.1**

**Fig.2**

Fig.3a

EP 1 644 158 B1

Fig.3b

Fig.4

TiAl6V4 Referenz

TiAl6V4 (H2 beladen)

TiAl6V4 beladen + entladen

EP 1 644 158 B1

Fig.5

Ti6Al4V - Referenzwerkstoff

α

β$_{trans}$

α

β$_{trans}$

0     50 µm

Fig.6a

Ti6Al4V0.5H, 700°C/2h/50mbar H$_2$

β$_{trans}$

α

α

β$_{trans}$

β$_{trans}$

α

0     50 µm

Fig.6b

Ti6Al4V0.5H, 700°C/2h/50mbar H$_2$, 700°C/2h/10$^{-5}$mbar

α

α

β$_{trans}$

0     50 µm

Fig.6c

13

Fig. 7a

Ti6Al4V     Ti6Al4V0.5La     Ti6Al4V1.5La

Fig. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0479212 A

**In der Beschreibung aufgeführte Nicht-Patentliteratur**

- **B.A. KOLACHEV.** *Metal Science and Heat Treatment,* 1999, vol. 41 (3-4

- **YU. B. EGOROVA et al.** *Metal Science and Heat Treatment,* Marz 2003, vol. 45 (3-4